# EUROPEAN PATENT SPECIFICATION

(11) **EP 2 552 035 B1**
(45) Date of publication and mention of the grant of the patent: **03.05.2017**
(21) Application number: 10848222.5
(22) Date of filing: 29.06.2010
(51) Int. Cl.: H04B 10/079, H04B 10/272, H04J 3/16, H04Q 11/00

(54) **METHOD AND EQUIPMENT FOR MEASURING RECEPTION OPTICAL POWER OF OPTICAL NETWORK UNIT**
VERFAHREN UND AUSRÜSTING ZUR MESSUNG DER OPTISCHEN EMPFANGSLEISTUNG EINER OPTISCHEN NETZWERKEINHEIT
PROCÉDÉ ET ÉQUIPEMENT DE MESURE D'UNE PUISSANCE OPTIQUE DE RÉCEPTION D'UN MODULE DE RÉSEAU OPTIQUE

(30) Priority: 23.03.2010 CN 201010140609
(43) Date of publication of application: 30.01.2013
(73) Proprietor: ZTE Corporation, Shenzhen, Guangdong 518057 (CN)
(72) Inventor: LU, Jinshu, Shenzhen Guangdong 518057 (CN); LI, Mingsheng, Shenzhen Guangdong 518057 (CN)
(74) Representative: Lavoix
(86) International application number: PCT/CN2010/074684
(87) International publication number: WO 2011/116560

(56) References cited:
- WO-A1-2007/010518
- WO-A1-2008/038981
- CN-A- 1 983 878
- CN-A- 101 005 317
- CN-A- 101 494 497
- CN-A- 101 621 332
- CN-Y- 201 118 594
- KR-A- 20020 054 453
- KR-A- 20030 087 881
- US-A1- 2007 023 615
- US-A1- 2007 264 031
- US-A1- 2008 056 720
- US-B1- 7 414 234

## Description

### TECHNICAL FIELD

The disclosure relates to the measurement technology of optical power in a Gigabit-Capable Passive Optical Network (GPON) system, more particularly to a method and device for measuring received optical power of an Optical Network Unit (ONU).

### BACKGROUND

Via years of standard setting, chip and equipment research and development, and interoperability testing for the GPON, the GPON equipment deployment has been gradually spread in domestic and international operators at present, and will be increased in large scale in the future. Such large-scale deployment can have thousands of GPON devices, in particular, the number of the ONU terminal device is more huge; the maintenance and management for the devices are challenged, in particular, it needs to timely determine whether the device has a fault, if the device has ageing and performance degradation problems and the like after being operated for a long time; wherein, a method for acquiring the optical power of the ONU at an Optical Line Terminal (OLT) side is effective for positioning the device failure; it can diagnose whether a current physical link has a problem via the optical power received at the OLT side, and it also can judge whether the optical module has signs of ageing by tracking the change of the optical power for a long time, thus, the operators can take preventive measures in advance.

The structure of the GPON system is always as follows: one or multiple splitters which broadcast signals sent from the OLT side to each of the ONUs, namely, a point-to-multipoint mode, the downlink direction of the signals adopts the broadcasting mode, and adopts a fixed 8K clock, which has 8000 frames per second, and the signals can be continuously sent, each of the ONUs only receives and analyzes the own data according to certain rules; however, the uplink direction of the signals is to send multiple ONUs to one OLT, namely, a multipoint-to-point mode; conflicts of the signals can be caused if the signals are continuously sent; thus, the uplink direction of the signals can only adopt a sub-timeslot burst mode.

In the conventional art, after receiving the uplink optical signal sent from the ONU, the optical module at the OLT side can directly acquire the received optical power of each ONU by measuring a Received Signal Strength Indicator (RSSI); however, the bandwidth of the uplink signals sent from each ONU is certainly required in order to accurately measure the RSSI of each ONU, the optical module is almost required to delay a certain time after detecting the uplink signals of the ONU, and then to trigger the optical module and to collect the optical signals, and the uplink signals are also required to last for a certain time during the measurement process of the optical module, for example, 300-600ns, even microsecond grade; if the bandwidth of the uplink signals sent from the ONU cannot reach the measurement requirements of the optical module, the optical module cannot accurately measure the received optical power, or fundamentally cannot measure the power. But the bandwidth which is distributed to the uplink signals of each ONU is distributed by a Dynamical Bandwidth Assigned (DBA) module according to a Service Level Agreement (SLA), thus, the conflicts between the SLA and the measurement requirements of the RSSI may be caused, namely, if the measurement requirements of the RSSI are satisfied, the measurement requirements of the SLA cannot be satisfied, and the DBA and SLA of the whole system may be greatly influenced; otherwise, if the measurement requirements of the SLA are satisfied, the measurement requirements of the RSSI cannot be satisfied, or the measurement requirements of the RSSI cannot be satisfied under some SLA at all events, and now, the RSSI cannot be measured, or a very large difference may exist between the measured RSSI value and the actual value.

### SUMMARY

In view of the above, the main objective of the disclosure is to provide a method and device for measuring received optical power of an ONU, which can accurately measure the received optical power in the case of synchronously satisfying the measurement requirements of the SLA and the RSSI.

The features of the method and device according to the present disclosure are defined in the independent claims, and the preferable features according to the present invention are defined in the dependent claims.

By adopting a method and device for measuring received optical power of an ONU provided by the disclosure, the bandwidth and/or byte width required for measuring the RSSI are/is acquired according to the type of the optical module, and are/is notified to the DBA module; the DBA module distributes the bandwidth and/or byte width to the ONU of which the RSSI is measured according to the SLA, the ONU sends the uplink optical signal to the optical module according to the bandwidth and/or byte width, and the optical module measures the RSSI value according to the uplink signal.

The advantages of the disclosure are that: the method and device provided by the disclosure can accurately acquire the received optical power of the ONU at the OLT side, and can synchronously satisfy the requirements of the SLA and the RSSI when the DBA module distributes the bandwidth, thus the resource occupation rate of the system bandwidth is saved.

### BRIEF DESCRIPTION OF THE DRAWINGS

Fig. 1 shows a flowchart of a method for measuring received optical power of an ONU of the disclosure;
Fig. 2 shows a diagram of a corresponding relationship between a bandwidth of an uplink optical signal and a trigger condition of an optical module; and
Fig. 3 shows a structural diagram of a device for measuring received optical power of an ONU of the disclosure.

### DETAILED DESCRIPTION

The basic concept of the disclosure is that: acquiring a bandwidth and/or byte width required for measuring an RSSI according to a type of an optical module to notify a DBA module; distributing, by the DBA module, the bandwidth and/or byte width to an ONU of which the RSSI is measured; sending, by the ONU, an uplink optical signal to the optical module according to the bandwidth and/or byte width; and measuring, by the optical module, the RSSI according to the uplink signal to acquire the accurate RSSI value.

The solution of the disclosure is described in details below with reference to specific embodiments by taking the acquisition of the bandwidth required for measuring the RSSI as an example.

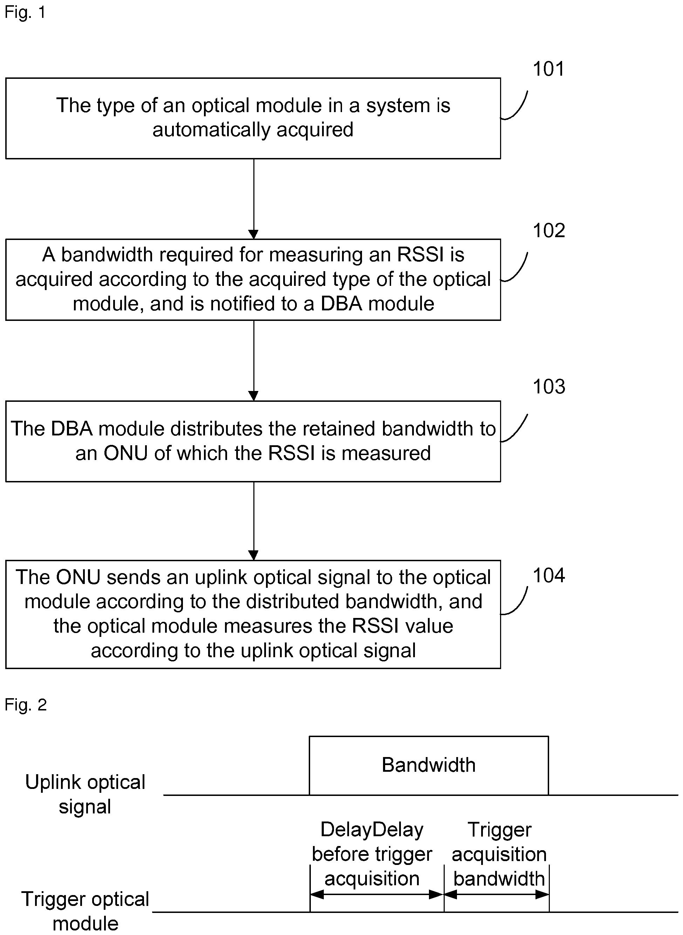

As shown in Fig. 1, a method for measuring received optical power of an ONU provided by the disclosure includes the steps as follows.

Step 101: the type of an optical module in a system is automatically acquired;
in this step, when the system, in which a non-pluggable optical module is arranged, is initialized, or when the system, in which a pluggable optical module such as a Small Form-factor Pluggable transceiver (SFP) is arranged, detects that the optical module is in place, the type of the optical module is acquired by reading the own RAM information via a standard Inter-Integrated Circuit (I2C) bus, and includes: manufacturer information and an optical module model.

Step 102: a bandwidth required for measuring an RSSI is acquired according to the acquired type of the optical module, and is notified to a DBA module;
in this step, a corresponding relationship between the type of the optical module and a measurement requirement of the RSSI can be preset in the system, wherein, the corresponding relationship can be stored by using tables; as shown in Table 1, the bandwidth required for measuring the RSSI can be calculated by finding the corresponding measurement condition of the RSSI in Table 1 according to the acquired type of the optical module; or, the measurement condition of the RSSI corresponding to the type of the optical module can be dynamically configured via a network manager; the measurement conditions of the RSSI include: delay before trigger acquisition, width of trigger acquisition and the protected access time, wherein, the protected access time is a timing parameter of the optical module during operation.

**Table 1**

| | | | | |
|---|---|---|---|---|
| Manufacturer information of optical module | Optical module model | Delay before trigger acquisition (delay) | Width of trigger acquisition (width) | Protected access time |
| | | | | |

For example, for the optical module produced by the manufacturer Nippon Electric Company (NEC), the manufacturer information can be acquired via the RAM address 20-35 of the optical module: NEC_CORPORATION, and the optical module model thereof can be acquired via the address 40-55: OD_B2523_L2xP. The corresponding relationship between the bandwidth of the uplink optical signal and the trigger condition of the optical module is shown in Fig. 2:
when receiving an uplink optical signal of an ONU, namely, an uplink timeslot, the optical module needs to delay a certain time, and then begins to be triggered for measuring the RSSI; however, the uplink optical signal also needs to maintain a certain width during the process of measuring the RSSI. For such type of the optical module produced by NEC, the time of delay at least needs 2.5 microseconds, and the width at least needs 0.5 microsecond; therefore, the optical module at least needs 3 microseconds when needing to accurately measure the RSSI of an ONU. In a GPON system, as 1 Byte is equal to 6.43ns, the optical module is triggered at least after waiting 389 Bytes, and then the optical module begins to implement measurement, and the width of the uplink optical signal during the measurement at least needs to maintain 78 Bytes, namely, when using such model of the NEC optical module to accurately measure the RSSI of the ONU, the bandwidth of the uplink optical signal distributed to the ONU at least should be 389+78=467 bytes, namely, the bandwidth required for measuring the RSSI is 467 bytes.

Here, supposing that the RSSIs of M ONUs are measured per second, the bandwidth which is at least retained is M*467*8bps; the bandwidth is uniformly distributed to the DBA cycle, if there are N DBA cycles within one second, the bandwidth needs to be distributed per N/M DBA cycle. For example, if one ONU is measured per second, and the DBA cycle is one millisecond, namely, M is equal to 1, N is equal to 1000, then 3.736K bandwidth at least needs to be retained; however, this bandwidth only takes a small part of the bandwidth of the whole system, thus the bandwidth resources of the system can be saved.

If a new type of the optical module is used, and the type of this optical module is not preset in the system, the corresponding measurement conditions of the RSSI cannot be acquired in the table; however, the data can be acquired in the related information of this optical module before the use, and the above data can be manually input to the system via the network manager.

The bandwidth required for measuring the RSSI is retained in the DBA module after being acquired via the above method.

Step 103: the DBA module distributes the retained bandwidth to an ONU of which the RSSI is measured;
in this step, when needing to measure the RSSI of an ONU, the DBA module distributes the retained bandwidth to a Transmission Container (TCONT) of the ONU according to an SLA, wherein the distribution mode is to assign a start value and a stop value of the TCONT, and no matter this bandwidth is distributed by any frequency, the difference between the start value and the stop value assigned by the TCONT should at least satisfy the bandwidth required for measuring the RSSI, when supporting the RSSI measurement. For example, for the type of the NEC optical module, if the bandwidth of the ONU Management and Control Interface (OMCI) TCONT is distributed once per DBA cycle, the accurate measurement for the RSSI can be guaranteed only when the distributed bandwidth value is greater than or equal to 467 Bytes; if the bandwidth is not distributed once per DBA cycle, supposing that the bandwidth is distributed once per eight DBA cycles, the RSSI measurement can be implemented only within the bandwidth which satisfies the measurement conditions of the RSSI, namely, 467 Bytes, but cannot implement the RSSI measurement within other bandwidths which do not satisfy the conditions.

The TCONT is divided into an OMCI TCONT and a service TCONT. The distributed bandwidth of the service TCONT is limited by the SLA, and the distributed bandwidth cannot exceed the SLA agreement, but the OMCI TCONT is always configured to load management data of the ONU, without externally performing the SLA, and the bandwidth needed during normal operation of the ONU is smaller, generally, the SLA cannot be exceeded even when distributing the bandwidth required for measuring the RSSI to the OMCI TCONT; thus, the bandwidth can be fixedly distributed to the OMCI TCONT when the DBA module distributes the bandwidth to the TCONT, and other service TCONTs cannot be influenced at any time; or, the retained bandwidth is selectively distributed to the TCONTs which do not reach the maximum SLA value, the SLA cannot be influenced while the retained bandwidth can be made in full use; or, the combination mode can be adopted, if the distributed bandwidth exceeds the SLA, the bandwidth is distributed to the OMCI TCONT, otherwise, the bandwidth is distributed to the service TCONT. The above bandwidth distribution method not only can satisfy the SLA requirements, but also can satisfy the measurement requirements of the RSSI.

Step 104: the ONU sends an uplink optical signal to the optical module according to the distributed bandwidth, and the optical module measures the RSSI value according to the uplink optical signal;
in this step, the ONU sends the uplink optical signal which satisfies the measurement requirements of the RSSI to the OLT side according to the distributed bandwidth, the optical module accurately measures the RSSI according to the own working sequence, so as to acquire the accurate optical power information.

In this method, when the RSSI measurement of one ONU is completed, the DBA module immediately releases this bandwidth, automatically retains the bandwidth, and distributes the bandwidth until measuring the next ONU; the DBA module can also continuously distribute the retained bandwidth to the former ONU, release the former bandwidth when needing to measure the next ONU, and then distribute this bandwidth to the current ONU which needs to implement measurement.

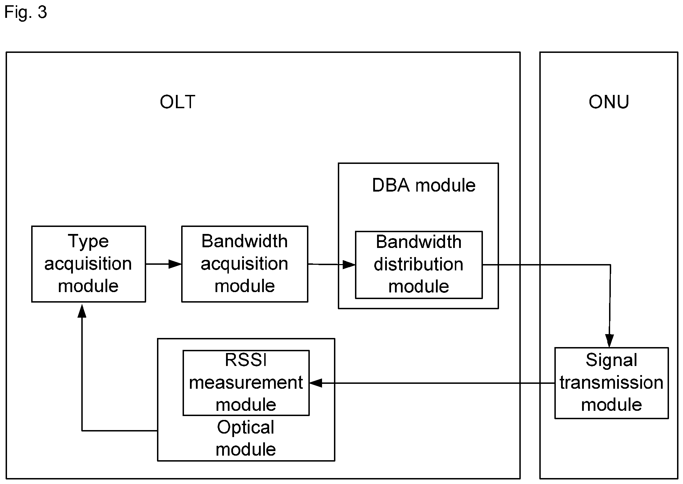

Based on above method, the disclosure also provides a device for measuring received optical power of an ONU, as shown in Fig. 3, which includes: a bandwidth acquisition module, a bandwidth distribution module, a signal transmission module and an RSSI measurement module;
the bandwidth acquisition module, which is located at an OLT side, and is configured to acquire a bandwidth and/or byte width required for measuring an RSSI according to a type of an optical module, and to notify the bandwidth and/or byte width to the bandwidth distribution module in a DBA module at the OLT side;
the bandwidth distribution module, which is located in the DBA module at the OLT side, and is configured to distribute the bandwidth and/or byte width to the ONU of which the RSSI is measured ;
the signal transmission module, which is located at the ONU side, and is configured for the ONU to send an uplink optical signal to the optical module according to the distributed bandwidth and/or byte width; and
the RSSI measurement module, which is located in the optical module at the OLT side, and is configured to measure the RSSI value according to the uplink optical signal.

The device also includes a type acquisition module, which is located at the OLT side, and is configured to acquire the type of the optical module by reading RAM information of the optical module, wherein the type of the optical module includes: manufacturer information and an optical module model.

The step that the bandwidth acquisition module is configured to acquire the bandwidth and/or byte width required for measuring the RSSI according to the type of the optical module specifically includes: the bandwidth acquisition module is configured to acquire the bandwidth and/or byte width required for measuring the RSSI according to a corresponding relationship between the type of the optical module and a measurement condition of the RSSI which is preset in a system; or, to dynamically configure the bandwidth and/or byte width required for measuring the RSSI corresponding to the type of the optical module through a network manager.

The step that the bandwidth distribution module is configured to distribute the bandwidth and/or byte width to the ONU of which the RSSI is measured specifically includes: the DBA module is configured to distribute the bandwidth and/or byte width to a TCONT of the ONU according to an SLA, and to assign a start value and a stop value of the TCONT; wherein the difference between the start value and the stop value satisfies the bandwidth and/or byte width required for measuring the RSSI.

The step of distributing the retained bandwidth to a TCONT of the ONU specifically includes: fixedly distributing the bandwidth and/or byte width to an OMCI TCONT; or selectively distributing the bandwidth and/or byte width to the TCONT which does not achieve the maximum SLA value; or adopting a combination mode, namely, distributing the bandwidth and/or byte width to the OMCI TCONT if the distributed bandwidth exceeds the SLA, otherwise, distributing the bandwidth and/or byte width to a service TCONT.

## Claims

1. A method for measuring received optical power of an Optical Network Unit, ONU, **characterized in that** the method comprises:
acquiring a type of an optical Received Signal Strength Indicator (RSSI) measurement module at an Optical Line Terminal, OLT, side automatically (101);
acquiring a bandwidth and/or byte width required for measuring a Received Signal Strength Indicator, RSSI, according to the acquired type of the optical module, and notifying the bandwidth and/or byte width to a Dynamical Bandwidth Assigned, DBA, module at the OLT side (102);
distributing, by the DBA module, the bandwidth and/or byte width to the ONU of which the RSSI is measured (103); and
sending, by the ONU, an uplink optical signal to the optical module according to the bandwidth and/or byte width; and measuring, by the optical module, the RSSI value according to the received uplink optical signal (104).

2. The method according to claim 1, wherein the step of acquiring the bandwidth and/or byte width required for measuring the RSSI according to the type of the optical module comprises: calculating the bandwidth and/or byte width required for measuring the RSSI by finding a corresponding relationship between the type of the optical module and a measurement condition of the RSSI which is preset in a system; or, dynamically configuring the bandwidth and/or byte width required for measuring the RSSI corresponding to the type of the optical module through a network manager.

3. The method according to claim 2, wherein the acquiring the type of the optical module at the OLT side automatically comprises: acquiring the type of the optical module by reading Random-Access Memory, RAM, information of the optical module.

4. The method according to any one of claims 1 to 3, wherein, the step of distributing the bandwidth and/or byte width to the ONU of which the RSSI is measured by the DBA module comprises: distributing, by the DBA module, the bandwidth and/or byte width to one Transmission Container, TCONT, of the ONU according to a Service Level Agreement, SLA, and assigning a start value and a stop value of the TCONT; wherein a difference between the start value and the stop value satisfies the bandwidth and/or byte width required for measuring the RSSI.

5. The method according to claim 4, wherein the step of distributing the bandwidth and/or byte width to one TCONT of the ONU comprises: fixedly distributing the bandwidth and/or byte width to an ONU Management and Control Interface, OMCI, TCONT; or selectively distributing the bandwidth and/or byte width to the TCONT which does not achieve a maximum SLA value; or distributing the bandwidth and/or byte width to the OMCI TCONT if the distributed bandwidth and/or byte width exceed/exceeds the SLA, otherwise, distributing the bandwidth and/or byte width to a service TCONT.

6. A device for measuring received optical power of an Optical Network Unit, ONU, **characterized in that** the device comprising: a type acquisition module, a bandwidth acquisition module, a bandwidth distribution module and a Received Signal Strength Indicator, RSSI, measurement module at an Optical Line Terminal, OLT, side; and also comprising a signal transmission module at an ONU side;
the type acquisition module is configured to acquire the type of the optical Received Signal Strength Indicator (RSSI) measurement module automatically;
the bandwidth acquisition module is configured to acquire a bandwidth and/or byte width required for measuring an RSSI according to the type of the optical module, and to notify the bandwidth and/or byte width to the bandwidth distribution module in a Dynamical Bandwidth Assigned, DBA, module at the OLT side;
the bandwidth distribution module is configured to distribute the bandwidth and/or byte width to the ONU of which the RSSI is measured;
the signal transmission module is configured for the ONU to send an uplink optical signal to the optical module according to the distributed bandwidth and/or byte width; and
the RSSI measurement module is configured to measure the RSSI value according to the received uplink optical signal.

7. The device according to claim 6, wherein the type acquisition module is further configured to acquire the type of the optical module by reading Random-Access Memory, RAM, information of the optical module.

8. The device according to claim 7, wherein the step that the bandwidth acquisition module acquires the bandwidth and/or byte width required for measuring the RSSI according to the type of the optical module comprises: the bandwidth acquisition module is configured to calculate the bandwidth and/or byte width required for measuring the RSSI by finding a corresponding relationship between the type of the optical module and a measurement condition of the RSSI which is preset in a system; or, to dynamically configure the bandwidth and/or byte width required for measuring the RSSI corresponding to the type of the optical module through a network manager.

9. The device according to any one of claims 6 to 8, wherein the step that the bandwidth distribution module distributes the bandwidth and/or byte width to the ONU of which the RSSI is measured comprises: the DBA module is configured to distribute the bandwidth and/or byte width to one Transmission Container, TCONT, of the ONU according to a Service Level Agreement, SLA, and to assign a start value and a stop value of the TCONT; wherein a difference between the start value and the stop value satisfies the bandwidth and/or byte width required for measuring the RSSI.

10. The device according to claim 9, wherein the step of distributing the bandwidth and/or byte width to one TCONT of the ONU comprises: fixedly distributing the bandwidth and/or byte width to an ONU Management and Control Interface, OMCI, TCONT; or selectively distributing the bandwidth and/or byte width to the TCONT which does not achieve a maximum SLA value; or distributing the bandwidth and/or byte width to the OMCI TCONT if the distributed bandwidth and/or byte width exceed/exceeds the SLA, otherwise, distributing the bandwidth and/or byte width to a service TCONT.

## Patentansprüche

1. Verfahren zum Messen empfangender optischer Leistung einer optischen Netzwerkeinheit (ONU Optical Network Unit), **dadurch gekennzeichnet, dass** das Verfahren Folgendes umfasst:
automatisches Erfassen einer Art eines optischen Messmoduls für einen Indikator der empfangenen Signalstärke (RSSI - Received Signal Strength Indicator) an einer Seite eines OLT (Optical Line Terminal) (101),
Erfassen einer Bandbreite und/oder Byte-Breite, die zum Messen eines Indikators der empfangenen Signalstärke (RSSI) gemäß der erfassten Art des optischen Moduls erforderlich ist, und Übermitteln der Bandbreite und/oder Byte-Breite an ein Modul zum Zuweisen dynamischer Bandbreiten (DBA - Dynamical Bandwidth Assignment) an der OLT-Seite (102),
Verteilen der Bandbreite und/oder Byte-Breite an die ONU, von der der RSSI gemessen wurde, durch das DBA-Modul (103) und
Senden eines optischen Uplink-Signals an das optische Modul gemäß der Bandbreite und/oder Byte-Breite durch die ONU und Messen des RSSI-Wertes gemäß dem empfangenen optischen Uplink-Signal durch das optische Modul (104).

2. Verfahren nach Anspruch 1, wobei der Schritt des Erfassens der Bandbreite und/oder Byte-Breite, die für das Messen des RSSI gemäß der Art des optischen Moduls erforderlich ist, Folgendes umfasst: Berechnen der Bandbreite und/oder Byte-Breite, die zum Messen des RSSI erforderlich ist, durch Finden einer entsprechenden Beziehung zwischen der Art des optischen Moduls und einer Messbedingung des RSSI, die in einem System vorliegt, oder dynamisches Konfigurieren der Bandbreite und/oder Byte-Breite, die zum Messen des RSSI entsprechend der Art des optischen Moduls erforderlich ist, durch einen Netzwerk-Manager.

3. Verfahren nach Anspruch 2, wobei das automatische Erfassen der Art des optischen Moduls an der OLT-Seite Folgendes umfasst: Erfassen der Art des optischen Moduls durch Lesen der Informationen des Speichers mit wahlfreiem Zugriff (RAM - Random Access Memory) des optischen Moduls.

4. Verfahren nach einem der Ansprüche 1 bis 3, wobei der Schritt des Verteilens der Bandbreite und/oder Byte-Breite an die ONU, von der durch das DBA-Modul der RSSI gemessen wurde, Folgendes umfasst: Verteilen der Bandbreite und/oder Byte-Breite an einen Übermittlungsbehälter (TCONT - Transmission Container) der ONU durch das DBA-Modul gemäß einer Dienstgütevereinbarung (SLA - Service Level Agreement) und Zuweisen eines Startwertes und eines Stoppwertes des TCONT, wobei eine Differenz zwischen dem Startwert und dem Stoppwert der Bandbreite und/oder Byte-Breite genügt, die zum Messen des RSSI erforderlich ist.

5. Verfahren nach Anspruch 4, wobei der Schritt des Verteilens der Bandbreite und/oder Byte-Breite an einen TCONT der ONU Folgendes umfasst: festes Verteilen der Bandbreite und/oder Byte-Breite an den TCONT einer ONU-Verwaltungs- und Steuerschnittstelle (OMCI - ONU Management and Control Interface) oder wahlweises Verteilen der Bandbreite und/oder Byte-Breite an den TCONT, der keinen maximalen SLA-Wert erreicht, oder Verteilen der Bandbreite und/oder Byte-Breite an den OMCI-TCONT, wenn die verteilte Bandbreite und/oder Byte-Breite den SLA übersteigt/übersteigen, sonst Verteilen der Bandbreite und/oder Byte-Breite an einen Dienst-TCONT.

6. Gerät zum Messen empfangener optischer Leistung einer optischen Netzwerkeinheit (ONU Optical Network Unit), **dadurch gekennzeichnet, dass** das Gerät Folgendes umfasst: ein Art-Erfassungsmodul, ein Bandbreite-Erfassungsmodul, ein Bandbreite-Verteilungsmodul und ein Messmodul für einen Indikator der empfangenen Signalstärke (RSSI - Received Signal Strength Indicator) an einer Seite eines OLT (Optical Line Terminal) und außerdem ein Signalübertragungsmodul an einer ONU-Seite umfassend,
wobei das Art-Erfassungsmodul dafür konfiguriert ist, die Art des optischen Messmoduls für den Indikator der empfangenen Signalstärke (RSSI) automatisch zu erfassen,
wobei das Bandbreite-Erfassungsmodul dafür konfiguriert ist, die Bandbreite und/oder Byte-Breite, die zum Messen eines RSSI gemäß der Art des optischen Moduls erforderlich ist, zu messen und die Bandbreite und/oder Byte-Breite an das Bandbreite-Verteilungsmodul in einem Modul zum Zuweisen dynamischer Bandbreiten (DBA - Dynamical Bandwidth Assignment) an der OLT-Seite zu übermitteln,
wobei das Bandbreite-Verteilungsmodul dafür konfiguriert ist, die Bandbreite und/oder Byte-Breite an die ONU zu verteilen, von der der RSSI gemessen wurde,
wobei das Signalübertragungsmodul für die ONU konfiguriert ist, ein optisches Uplink-Signal gemäß der verteilen Bandbreite und/oder Byte-Breite an das optische Modul zu senden, und
wobei das RSSI-Messmodul dafür konfiguriert ist, den RSSI-Wert gemäß dem empfangenen optischen Uplink-Signal zu messen.

7. Gerät nach Anspruch 6, wobei das Art-Erfassungsmodul ferner dafür konfiguriert ist, die Art des optischen Moduls durch Lesen der Informationen des Speichers mit wahlfreiem Zugriff (RAM - Random Access Memory) des optischen Moduls zu erfassen.

8. Gerät nach Anspruch 7, wobei der Schritt, dass das Bandbreite-Erfassungsmodul die Bandbreite und/oder Byte-Breite erfasst, die zum Messen des RSSI gemäß der Art des optischen Moduls erforderlich ist, Folgendes umfasst: das Bandbreite-Erfassungsmodul ist dafür konfiguriert, die Bandbreite und/oder Byte-Breite, die zum Messen des RSSI erforderlich ist, durch Finden einer entsprechenden Beziehung zwischen der Art des optischen Moduls und einer Messbedingung des RSSI, die in einem System vorliegt, zu berechnen, oder die Bandbreite und/oder Byte-Breite, die zum Messen des RSSI entsprechend der Art des optischen Moduls erforderlich ist, durch einen Netzwerk-Manager dynamisch zu konfigurieren.

9. Gerät nach einem der Ansprüche 6 bis 8, wobei der Schritt, dass das Bandbreite-Verteilungsmodul die Bandbreite und/oder Byte-Breite an die ONU, von der der RSSI gemessen wurde, Folgendes umfasst: das DBA-Modul ist dafür konfiguriert, die Bandbreite und/oder Byte-Breite an einen Übermittlungsbehälter (TCONT - Transmission Container) der ONU gemäß einer Dienstgütevereinbarung (SLA - Service Level Agreement) zu verteilen und dem TCONT einen Startwert und einen Stoppwert zuzuweisen, wobei eine Differenz zwischen dem Startwert und dem Stoppwert der Bandbreite und/oder Byte-Breite genügt, die zum Messen des RSSI erforderlich ist.

10. Gerät nach Anspruch 9, wobei der Schritt des Verteilens der Bandbreite und/oder Byte-Breite an einen TCONT der ONU Folgendes umfasst: festes Verteilen der Bandbreite und/oder Byte-Breite an den TCONT einer ONU-Verwaltungs- und Steuerschnittstelle (OMCI - ONU Management and Control Interface) oder wahlweises Verteilen der Bandbreite und/oder Byte-Breite an den TCONT, der keinen maximalen SLA-Wert erreicht, oder Verteilen der Bandbreite und/oder Byte-Breite an den OMCI-TCONT, wenn die verteilte Bandbreite und/oder Byte-Breite den SLA übersteigt/übersteigen, sonst Verteilen der Bandbreite und/oder Byte-Breite an einen Dienst-TCONT.

## Revendications

1. Procédé de mesure d'une puissance optique reçue d'une unité optique de réseau, ONU, **caractérisé en ce que** le procédé comprend les étapes ci-dessous consistant à :
acquérir automatiquement un type d'un module optique de mesure d'indicateur d'intensité de signal reçu (RSSI) auprès d'un côté de terminaison de ligne optique, OLT, (101) ;
acquérir une largeur de bande et/ou une largeur en octets requises en vue de mesurer un indicateur d'intensité de signal reçu, RSSI, selon le type acquis du module optique, et notifier la largeur de bande et/ou la largeur en octets à un module d'assignation dynamique de largeur de bande, DBA, au niveau du côté de terminaison OLT (102) ;
distribuer, par le biais du module d'assignation DBA, la largeur de bande et/ou la largeur en octets, à l'unité ONU dont l'indicateur RSSI est mesuré (103) ; et
envoyer, par le biais de l'unité ONU, un signal optique de liaison montante au module optique, selon la largeur de bande et/ou la largeur en octets ; et mesurer, par le biais du module optique, la valeur d'indicateur RSSI selon le signal optique de liaison montante reçu (104).

2. Procédé selon la revendication 1, dans lequel l'étape d'acquisition de la largeur de bande et/ou de la largeur en octets requises en vue de mesurer l'indicateur RSSI selon le type du module optique comprend les étapes ci-après consistant à : calculer la largeur de bande et/ou la largeur en octets requises en vue de mesurer l'indicateur RSSI en trouvant une relation correspondante entre le type du module optique et une condition de mesure de l'indicateur RSSI qui est prédéfinie dans un système ; ou, configurer de manière dynamique la largeur de bande et/ou la largeur en octets requises en vue de mesurer l'indicateur RSSI correspondant au type du module optique, par le biais d'un gestionnaire de réseau.

3. Procédé selon la revendication 2, dans lequel l'étape d'acquisition automatique du type du module optique auprès du côté de terminaison OLT consiste à : acquérir le type du module optique en lisant des informations de mémoire vive, RAM, du module optique.

4. Procédé selon l'une quelconque des revendications 1 à 3, dans lequel, l'étape de distribution de la largeur de bande et/ou de la largeur en octets à l'unité ONU dont l'indicateur RSSI est mesuré par le module d'assignation DBA comporte les étapes ci-après consistant à : distribuer, par le biais du module d'assignation DBA, la largeur de bande et/ou la largeur en octets à un conteneur de transmission, TCONT, de l'unité ONU selon un accord de niveau de service, SLA, et affecter une valeur de départ et une valeur de fin du conteneur TCONT ; dans lequel une différence entre la valeur de départ et la valeur de fin satisfait la largeur de bande et/ou la largeur en octets requises en vue de mesurer l'indicateur RSSI.

5. Procédé selon la revendication 4, dans lequel l'étape de distribution de la largeur de bande et/ou de la largeur en octets à un conteneur TCONT de l'unité ONU comporte les étapes ci-après consistant à : distribuer de manière fixe la largeur de bande et/ou la largeur en octets à un conteneur TCONT d'interface de commande et de gestion d'unité ONU, OMCI ; ou distribuer de manière sélective la largeur de bande et/ou la largeur en octets au conteneur TCONT qui n'atteint pas une valeur d'accord SLA maximale ; ou distribuer la largeur de bande et/ou la largeur en octets au conteneur TCONT d'interface OMCI si la largeur de bande et/ou la largeur en octets distribuées dépasse(nt) l'accord SLA, et dans le cas contraire, distribuer la largeur de bande et/ou la largeur en octets à un conteneur TCONT de service.

6. Dispositif destiné à mesurer une puissance optique reçue d'une unité optique de réseau, ONU, **caractérisé en ce que** le dispositif comporte : un module d'acquisition de type, un module d'acquisition de largeur de bande, un module de distribution de largeur de bande et un module de mesure d'indicateur d'intensité de signal reçu RSSI au niveau d'un côté de terminaison de ligne optique OLT ; et comprenant également un module de transmission de signal au niveau d'un côté d'unité ONU ;
dans lequel le module d'acquisition de type est configuré de manière à acquérir automatiquement le type du module optique de mesure d'indicateur d'intensité de signal reçu (RSSI) ;
dans lequel le module d'acquisition de largeur de bande est configuré de manière à acquérir une largeur de bande et/ou une largeur en octets requises en vue de mesurer un indicateur RSSI selon le type du module optique, et à notifier la largeur de bande et/ou la largeur en octets à un module de distribution de largeur de bande dans un module d'assignation dynamique de largeur de bande, DBA, au niveau du côté de terminaison OLT ;
dans lequel le module de distribution de largeur de bande est configuré de manière à distribuer la largeur de bande et/ou la largeur en octets à l'unité ONU dont l'indicateur RSSI est mesuré ; et
dans lequel le module de transmission de signal est configuré de manière à amener l'unité ONU à envoyer un signal optique de liaison montante au module optique, selon la largeur de bande et/ou la largeur en octets distribuées ; et
dans lequel le module de mesure d'indicateur RSSI est configuré de manière à mesurer la valeur d'indicateur RSSI selon le signal optique de liaison montante reçu.

7. Dispositif selon la revendication 6, dans lequel le module d'acquisition de type est en outre configuré de manière à acquérir le type du module optique en lisant des informations de mémoire vive, RAM, du module optique.

8. Dispositif selon la revendication 7, dans lequel, à l'étape dans laquelle le module d'acquisition de largeur de bande acquiert la largeur de bande et/ou la largeur en octets requises en vue de mesurer l'indicateur RSSI selon le type du module optique : le module d'acquisition de largeur de bande est configuré de manière à calculer la largeur de bande et/ou la largeur en octets requises en vue de mesurer l'indicateur RSSI en trouvant une relation correspondante entre le type du module optique et une condition de mesure de l'indicateur RSSI qui est prédéfinie dans un système ; ou, à configurer de manière dynamique la largeur de bande et/ou la largeur en octets requises en vue de mesurer l'indicateur RSSI correspondant au type du module optique à travers un gestionnaire de réseau.

9. Dispositif selon l'une quelconque des revendications 6 à 8, dans lequel, à l'étape dans laquelle le module de distribution de largeur de bande distribue la largeur de bande et/ou la largeur en octets à l'unité ONU dont l'indicateur RSSI est mesuré : le module d'assignation DBA est configuré de manière à distribuer la largeur de bande et/ou la largeur en octets à un conteneur de transmission, TCONT, de l'unité ONU selon un accord de niveau de service, SLA, et à affecter une valeur de départ et une valeur de fin du conteneur TCONT ; dans lequel une différence entre la valeur de départ et la valeur de fin satisfait la largeur de bande et/ou la largeur en octets requises en vue de mesurer l'indicateur RSSI.

10. Dispositif selon la revendication 9, dans lequel l'étape de distribution de la largeur de bande et/ou de la largeur en octets à un conteneur TCONT de l'unité ONU comprend les étapes ci-après consistant à : distribuer de manière fixe la largeur de bande et/ou la largeur en octets à un conteneur TCONT d'interface de commande et de gestion d'unité ONU, OMCI ; ou distribuer de manière sélective la largeur de bande et/ou la largeur en octets au conteneur TCONT qui n'atteint pas une valeur d'accord SLA maximale ; ou distribuer la largeur de bande et/ou la largeur en octets au conteneur TCONT d'interface OMCI si la largeur de bande et/ou la largeur en octets distribuées dépasse(nt) l'accord SLA, et dans le cas contraire, distribuer la largeur de bande et/ou la largeur en octets à un conteneur TCONT de service.
